# EUROPEAN PATENT SPECIFICATION

(11) **EP 0 257 799 B1**
(45) Date of publication and mention of the grant of the patent: **13.10.1993**
(21) Application number: 87306526.2
(22) Date of filing: 23.07.1987
(51) Int. Cl.: G09F 15/00, E04B 2/74, F16B 3/00

(54) **Screen assembly**
Schirmzusammensetzung
Assemblage d'écrans

(30) Priority: 24.07.1986 GB 8618051
(43) Date of publication of application: 02.03.1988
(73) Proprietor: Nimlok Limited, London, WC2E 9DS (GB)
(72) Inventor: Wilson, Mervyn, Kettering Northamptonshire NN16 9AJ (GB); Gibbons, Martin, Weybridge Surrey KT15 3ND (GB); Perutz, Simon, Evanston Illinois 60201 (GB)
(74) Representative: Bardo, Julian Eason

(56) References cited:
- EP-A- 0 186 997
- FR-A- 2 032 185
- FR-A- 2 404 882
- GB-A- 1 270 242
- GB-A- 1 468 433
- GB-A- 2 126 309
- US-A- 3 160 249
- US-A- 4 103 465
- US-A- 4 166 332
- US-A- 4 545 142

## Description

This invention relates to a portable display system, having a plurality of panels which are detachably connected together.

British Patent Specification No 1 270 242 describes a display system employing an aluminium clip which is used to fasten a panel to an upright pole. In the arrangement shown in the specification the clip is fastened to the panel edge by means of a screw passing through a hole in its base, and to the pole by the snapping of a resilient arcuate portion of the clip around the pole. In a commercial embodiment of the arrangement the aluminium clip is fastened in a slot in the panel edge.

British Patent Specification No 2 126 309 describes a display system employing a plastics clip which is used to fasten a panel to an upright pole. In this case the clip is secured in a slot in the panel edge and fastened to the pole by the snapping of a resilient arcuate portion of the clip around the pole.

While the panel, pole and clip arrangements referred to above are entirely satisfactory for many purposes, it would be desirable sometimes, but not always, to have a simpler, if somewhat less versatile, method of fastening panels to one another. With the systems described above, panels can only be fastened together through the intermediary of clips and poles.

Various other display systems exist that each have different types of fastenings, but a problem arises in constructing and dismantling such assemblies quickly and easily. For example, US Patent Specification No 4 103 465 describes a display system comprising panels which, on their vertical sides, have keyways into which connectors can be slid to hold the panels together. While such a system has the advantage of being comparatively simple, it does not allow ready access to the connectors once they have been located in the keyways and this can give rise to problems when the system is being dismantled.

Other types of fastenings often suffer from the disadvantage that they affect the overall visual appearance of the screen assembly and spoil its clean lines.

It is also known to provide screen assemblies comprising a plurality of panels hingedly connected together. Such assemblies have the advantage that they are very simple and easy to erect since little more is involved than simply unfolding the panels. On the other hand the assembly is not very versatile.

Outside the field of portable display systems, the use of panels and connecting members in partitioning systems for buildings has also been described, for example in French Patent Specification No 2 032 185. However, although such systems are often designed so that they can be dismantled, they are not required to meet the same standards of portability, simplicity and versatility as display systems. The panels of such systems, each comprising a screen (usually of laminar construction) and a frame are commonly prefabricated and are required to meet constructional standards of, for example, robustness and sound-and fire-proofing. In a display system, on the other hand, although robustness is of importance, features such as visual attractiveness are also of particular importance, as is the possibility of readily being able to alter the appearance, size and, even, constuction of the screens. For this reason, techniques employed in partitioning systems for the construction industry have not conventionally been applied to portable display systems.

It is an object of the invention to provide a portable display system which is quick and easy to erect and to dismantle and yet is reasonably versatile.

According to one aspect of the invention a portable display system comprises a plurality of display panels and at least one elongate connecting member to connect the panels together, each panel comprising at least one screen member and at least one frame member which provides a channel in which an edge of the screen member is received and also provides an outwardly-facing slot in an edge of the panel, each slot comprising an interior portion and a restricted outer entrance portion which is defined by inwardly projecting lips that extend towards one another in a plane perpendicular to the plane of the screen member, the or each connecting member having a uniform cross-section with at least two slot engaging heads that extend at fixed angles relative to one another, each head having a width greater than the width of the entrance portion, so that the heads of the connecting member can be inserted into the ends of the said slots in respective panels that are to be connected together and slid along the slots, thereby coupling the edges of the panels together, with the heads of the connecting member being unable to pass through the entrance portions of the slots, wherein the or each connecting member has a body portion to which the slot engaging heads are joined, the body portion having a width greater than the width of the entrance portions of the slots, and wherein the connecting member and frame members are shaped such that when in use the connecting member is coupling the edges of the panels together, the body portion extends outwards between and alongside the lips of the frame members of adjacent panels and defines, together with the slot engaging heads, recesses in which the lips of the frame members engage, the engagement of the lips in the recesses and the location of the outwardly extending body portion between the lips of adjacent panels holding the panels in a substantially fixed angular relationship.

Preferably, each screen member is removable from its frame member(s).

A display system of this kind can be erected very quickly and easily and yet is not limited to any particular number or arrangement of panels. In the erected system, the connecting members are accessible because the body portions of the members extend outwards between the panels and the assembly can, consequently, also be dismantled comparatively easily.

To facilitate the connection of further components, for example shelves, to the display system, a longitudinally extending further slot may be formed in the body portion of the connecting member in such a position that the entrance of the further slot will be located between adjacent panels connected together by the connecting member. A component to be connected to the display system can then be secured in the further slot. With this form of connecting member the joints between adjacent panels can have very clean lines enhancing the overall appearance of the display system, while it is also possible (through the use of the further slot) to connect additional components, for example shelves, to the system.

The interengagement of a connecting member with a panel is such that substantially the only relative movement that can occur between them is longitudinal sliding movement. In this way the panels are held in substantially fixed relationship relative to one another with little or no play between adjacent panel edges that are connected together.

The body portion may extend outwards to fill, substantially, the gap between the said adjacent panels.

The or each connecting member may be an extruded component. In an embodiment of the invention, the or each connecting member is of hollow cylindrical construction, the wall of the cylinder being shaped to form the slot engaging heads.

Preferably, each panel slot extends along substantially the whole length of the edge of the panel in which it is formed. The connecting member may be arranged to connect panels together in a common plane or in planes inclined to one another. In the latter case, in a preferred embodiment of the display system, the angle between the connected panels may be 150°, 135°, 120°, 90° or 60°. In this way a versatile, free standing display system may be constructed and dismantled quickly and easily.

The versatility of the system is improved when a respective frame member is provided along each edge of the panels. To form a secure border for a panel, the adjoining ends of the frame members of that panel may be connected by an angled bracket, which preferably is fixed to interior walls of the frame members. In one embodiment the frame members are aluminium extrusions.

The screen member of a panel may form part at least of a face of the panel. In one form of the invention, each panel comprises a single screen member only. In another form of the invention, each panel comprises two spaced-apart screen members each providing substantially the whole of a respective face of the panel and each frame member provides two channels, each of which channels receives an edge of a respective one of the screen members.

Each edge of the or each screen member may overlap the longitudinal side walls of the slot in the panel. To this end, the channel may be defined, at least partly, by the longitudinal side walls of the slot in the frame member. Thus a panel may be made so that if one extrusion is removed the rest of the border is left in place, and the or each screen member may then be replaced without further dismantling of the panel.

In an advantageous embodiment of the invention wherein a plurality of connecting members are provided, the connecting members are of various lengths. The connecting members may include a connecting member of length approximately equal to the length of a side of a panel to be connected and a connecting member of length approximately equal to half the length of a side of a panel to be connected.

The portable display system may comprise a plurality of panels and a plurality of connecting members for connecting the panels together where some of the connecting members are arranged to connect panels together in a common plane and others are arranged to connect panels together in planes inclined to one another, some of the connecting members being of one length and others being of another length. An arrangement of this type enables a display system to be constructed, in which panels lie in different planes and also in tiers which are not necessarily all of the same height. Preferably, the system is so designed that panels can be connected by both horizontally and vertically extending connecting members.

Preferably, at least in the case of an assembly comprising a plurality of tiers of panels, one head of a connecting member is located partly in the slot in one edge of a first panel and partly in the slot in one edge of a second panel. In this way a more sturdy assembly may be constructed.

The screen assembly may comprise at least three panels and at least one elongate connecting member to connect the panels together, the or each connecting member having at least two panel engaging portions which can engage with respective panels to connect them together, in which one panel engaging portion of one connecting member partly engages two of the panels and the other panel engaging portion of the or said one connecting member at least partly engages the third panel, characterized in that each panel engaging portion comprises a head engageable in a slot in an edge of the respective panel, the slot and the head being so dimensioned that the head can be slid freely along the slot. Such a screen assembly may have at least four panels, the other head of the or said one connecting member being located at least partly in the slot in one edge of the fourth panel.

The display system may further include a plurality of poles and a plurality of fastening elements, each fastening element having a foot portion securable in a slot in a panel edge and an arcuate portion that is connected to the foot portion and is capable of being snapped on to a pole, whereby panels may be connected together either by said elongate members or by said fastening elements and poles. An arrangement of this kind enables a display system to be constructed using a mixture of two assembly techniques and thus provides a particularly versatile arrangement.

The display system may include at least one further fastening element having a foot portion fastenable to a slot in the panel and supporting portion by which an additional component may be mounted on the screen assembly. The supporting portion may, for example, be in the form of a shelf supporting bracket.

In a preferred form of this arrangement, the fastening elements (either with arcuate portions or with supporting portions) may be securable in the slots by rotation, the slot engaging heads of the connecting members being freely slidable in the slots.

By way of example various embodiments of the invention will now be described with reference to the accompanying drawings of which:
- Fig. 1: is a front elevation of a screen assembly,
- Fig. 2: is a view along the line II-II of Fig. 1,
- Fig. 3: is a detailed view of part of one of the panels of the screen assembly of Fig. 1,
- Figs. 4 to 9: are views of the cross-sections of respective forms of the connecting member,
- Figs. 10 and 11: are views of the cross-sections of other forms of connecting member,
- Fig. 12: is a view of the cross-section of another form of connecting member,
- Fig. 13: is a perspective view of another screen assembly,
- Fig. 14: is an isometric view of a component of the assembly of Fig. 13,
- Fig. 15: is a view from one side of the component shown in Fig 14 in the direction of the arrow XV,
- Fig. 16: is a perspective view of a known screen assembly,
- Fig. 17: is a perspective view of a component of the assembly of Fig. 16,
- Fig. 18: is a perspective view of another component for use with a screen assembly,
- Fig. 19: is a side view showing the component of Fig. 18 in use,
- Fig. 20: is a view on the line XX-XX of Fig. 19,
- Figs. 21 to 23: are views of the cross-sections of other forms of connecting members,
- Fig. 24: is similar to Fig. 21 but shows a fastening device secured to the connecting member, and
- Fig. 25: is an exploded perspective view of the components shown in Fig. 24.

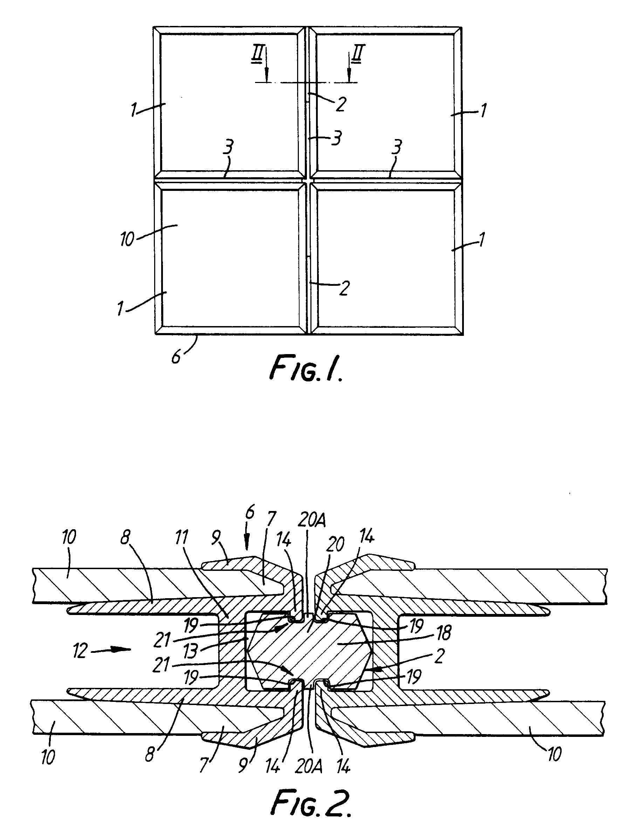

The screen assembly shown in Fig. 1 comprises four panels 1, joined together by connecting members 2, 3.

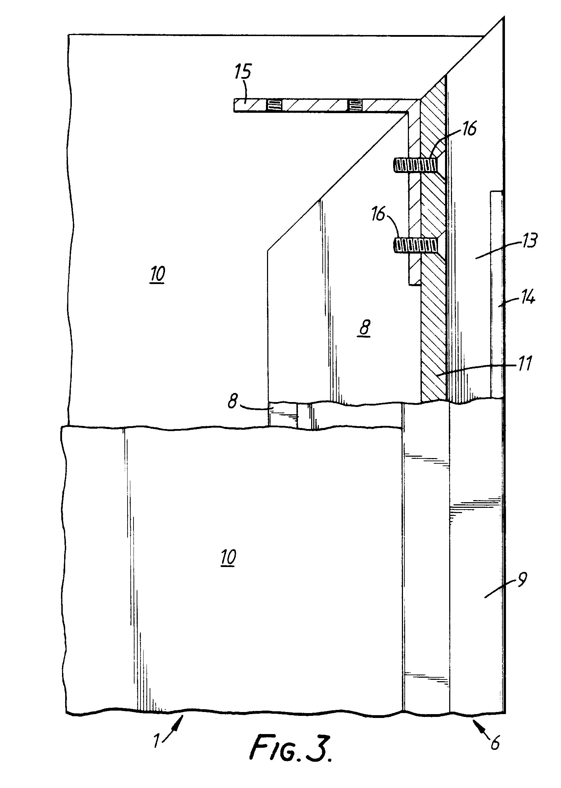

Referring now also to Figs. 2 and 3, each panel comprises a pair of parallel display screens 10 located at each of their four edges by respective aluminium extrusions 6 which provide a rigid frame for the panel and whose cross-sectional shape is shown most clearly in Fig. 2. Each extrusion 6 has channels 7 which are defined between walls 8 and fins 9 of the extrusion and in which the edges of the screens 10 are received. The walls 8 of each extrusion are joined by a longitudinal back wall 11 which, together with the walls 8, defines an inner slot 12 and an outer slot 13. The outer slot 13 is T-shaped, the stem of the "T" forming a restricted outer entrance portion of the slot and being defined by inwardly projecting lips 14 of the extrusion 6 (except at the ends of the extrusions where the lips are cut away to allow access to the slots 13 in extrusions bordering adjacent edges of the panels) and the bar of the "T" defining an interior portion of the slot having longitudinal side walls connected by the back wall 11. The ends of the extrusions 6 are joined by a right-angled bracket 15, located in the inner slot 12 and attached to the extrusion by screws 16, inserted from the outer slot 13 through holes in the back walls 11 of the extrusions. Removal of any one of the extrusions by unfastening its screws 16 allows either or both of the screens 10 to be changed by sliding them out of the channels 7.

Referring to Fig. 2, the connecting member 2, which has a uniform cross-section throughout its length and may be formed by extrusion and cut to length, comprises two heads 18 to engage the slots 13 in the panels 1, each head fitting with clearance in the interior portion of the respective slot but having a width greater than the separation of the lips 14 so that it will not pass through the entrance portion of the slot. The heads 18 of the connecting member have pointed ends and are joined to a central body 20 by necks 21, thereby defining recesses 19 which accommodate the lips 14. Because the width of the body 20 is greater than the width of the restricted outer entrance portions of the slots 13, as can be seen from Fig. 2, the body extends (at 20A) between the extrusions 6 of the adjacent panels. In order to attach the connecting member 2 to a panel 1, one of the heads 18 of the connecting member 2 is inserted into one end of the slot and then slid along the slot until the whole of the head is located within the slot; in order to enable the head 18 to be inserted into the end of the slot 13, the lips 14 are cut away at the ends of the slot. In the more common case where the connecting member 2 is to be engaged with two panels at once, the panels are brought into the position shown in Fig. 2 and then the two heads 18 of the connecting member 2 are inserted into the slots 13 of the panels. The connecting member 2 is freely slidable longitudinally in the slots 13 and, because of the engagement of the lips 14 in the recesses 19 of the connecting member and the location of the projecting body portions 20A between the panels, this is substantially the only relative movement that can occur between the connecting member and the panels.

In the particular arrangement shown in Fig. 1, two tiers of panels are connected together. In such a case it is advantageous for the connecting member to extend across the junction of the upper and lower tiers of panels. Accordingly, two lengths of connecting members are provided: one, which is referenced 2 in the drawings, is about half the length of a panel side and the other, which is referenced 3 in the drawings, is almost the same length as a panel side. The members 2 and 3 are identical apart from their length. In the arrangement shown in Fig. 1 the side edges of the panels 1 are joined together by a pair of connecting members 2 between which a member 3 is provided. The top edges of the lower tier of panels are joined to the bottom edges of the upper tier by a pair of connecting members 3. The connecting members 2, 3 are slidably located in the panel edges and the lower vertical connecting member 2 is held in position simply by the floor on which it rests. The connecting members between the top edges of the lower tier of panels and the bottom edges of the upper tier of panels may be omitted if desired.

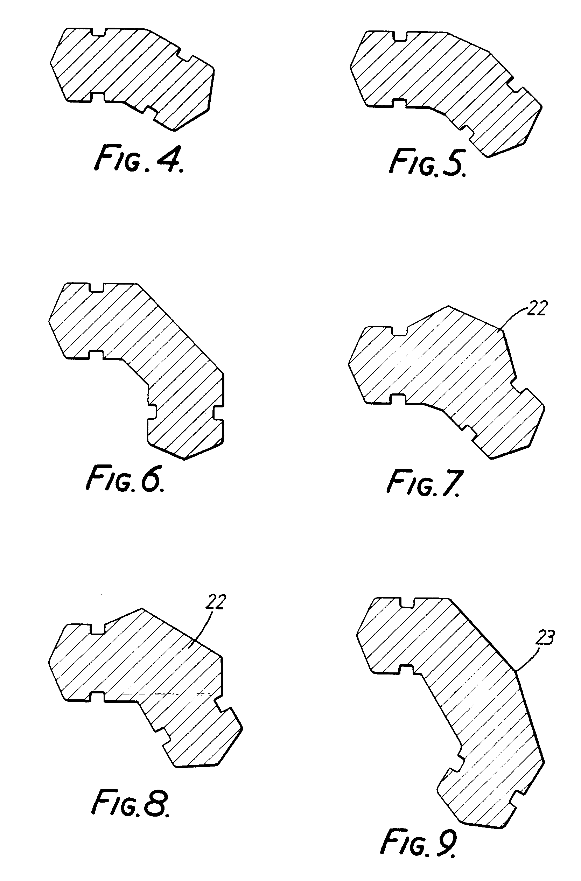

The connecting members 2, 3 are suitable for connecting panels together in a common plane. Figs. 4 to 9 show connecting members of the same type but of different cross-sections, which may be used to connect two panels together with an angle between them. The connectors shown in Figs. 4 to 6 provide angles, between the connected panels, of 150°, 135° and 90° respectively. The connector shown in Fig. 7 also provides an angle, between connected panels, of 135° but in this case the back 22 of the connector is extended so that it will project to a greater extent between the extrusions 6 of the connected panels and provide a smoother line across the gap between the panels. Fig. 8 shows a connector with a similarly-extended back 22 but, in this case, the connector provides an angle of 120° between connected panels. Fig. 9 shows a connector which provides an angle of only 60° between panels and although, in this case, the back of the connector is not extended as in Figs. 7 and 8 it is contoured at 23 to follow the line of the panels.

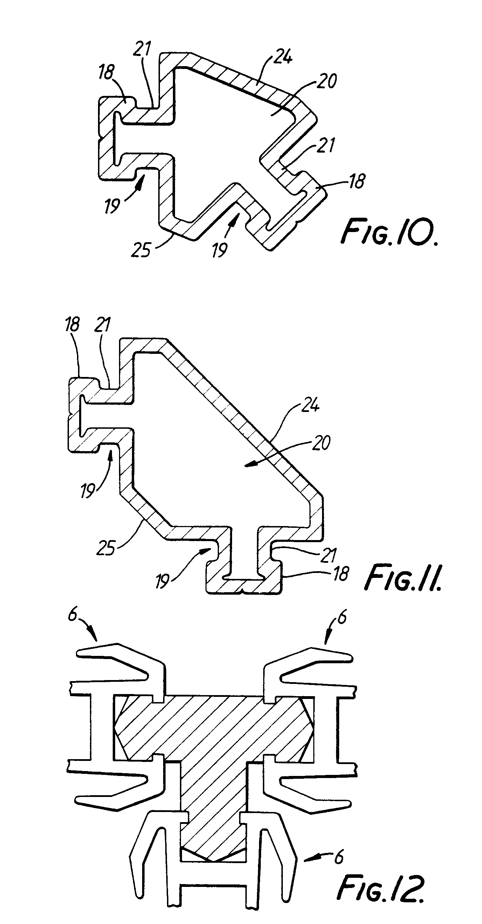

Another type of connector is illustrated in Figs. 10 and 11. This type of connector has the same external features as the connectors shown in Figs. 4 to 9 that is, two slot-engaging heads 18 which are joined to a central body 20 by necks 21 which define recesses 19 which accommodate the lips 14 of the panel extrusions 6. In this case, however, the connectors are extruded components of hollow cylindrical construction, the wall of the cylinder being shaped to form the required external features. The connector shown in Fig. 10 will provide an angle, between panels, of 135° while that shown in Fig. 11 will provide an angle of 90°. The slot-engaging heads 18 of these connectors are not pointed as in Figs. 4 to 9 but are of rectangular cross-section similar to, but smaller than, the interior portion of the slots 13 in the panel extrusions 6. In addition, the back and front portions 24, 25 of the central body 20 of each connector are extended in such a way that they will completely fill the respective gaps between the adjacent extrusions 6 of the connected panels.

A screen assembly having a plurality of panels and a variety of connecting members may thus be assembled simply and quickly. The finished assembly has a clean outline either with simple recesses visible between adjacent panels or, if desired, with the gaps between panels filled by the central bodies of the connecting members.

The screens 10 may be made of board or a similar material and may be provided with a flocked surface. The screens 10 are each reversible and different surfaces and/or different colours of surface may be provided on opposite sides of the boards. If only one side of the screen assembly is to be viewed then the rear screen 10 may be omitted. Instead of providing two screens 10 a single thick screen element may be provided, the edges of this element being received in the inner slot 12 of the extrusions 6 instead of the channels 7. In this case, the frame members 6 need not have the shape shown in Fig. 2.

Other forms of connecting member may be used for joining panels in different configurations and, in particular, for joining more than two panels. For example, by placing two of the connecting members shown in Fig. 6 back to back and securing them together, for example by welding, it is possible to join together four panels at right angles to one another. Such a connector could be extruded in a single piece if preferred. Fig. 12 shows a connector, extruded in a single piece, for use in joining three panels together (only the panel extrusions 6 being shown). Two of the panels lie in a common plane and the third panel is in a plane at right angles to them.

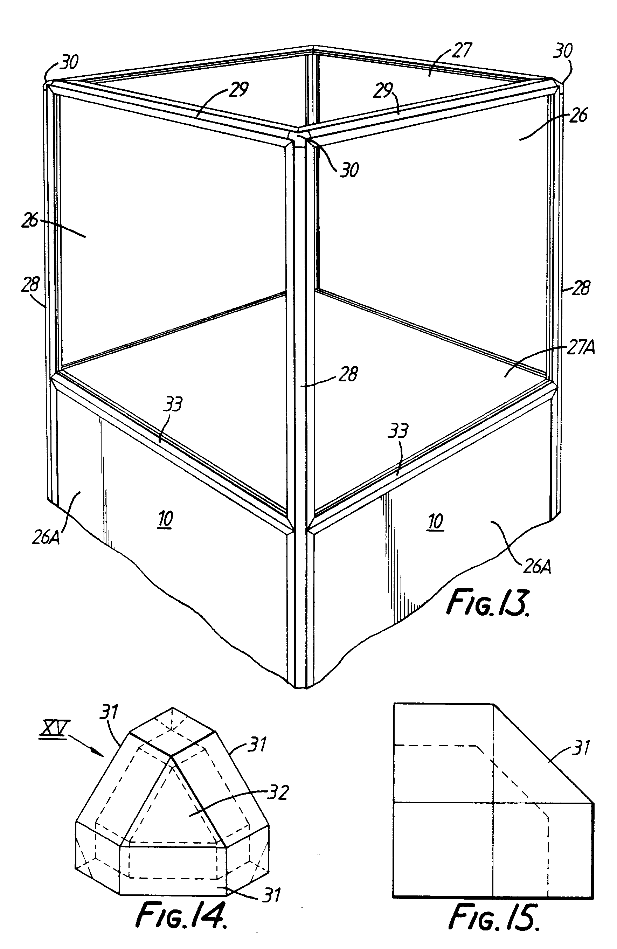

While in the arrangement shown in Fig. 1 four panels are connected together in two tiers it will be appreciated that this is only one of many possible arrangements that can be constructed using a screen assembly as described above. Fig. 13, for example, shows a display case comprising a horizontal top panel 27 and four vertical sides each composed of two panels 26, 26A one above the other. The upper panel 26 of each side is transparent, as is the top panel 27, and the lower panel 26A of each side is opaque. The transparent upper part of the display case has a floor formed by an opaque horizontal panel 27A on which an object to be displayed can be positioned. The vertical panels 26, 26A of adjacent sides are connected together by vertical connecting members 28 which extend the complete height of the display case and which may be of the type shown in Fig. 6 or Fig. 11, and each side is connected to the horizontal top panel 27 by a horizontal connecting member 29 which may also be of the type shown in Fig. 6 or Fig. 11. The two vertical panels 26, 26A of each side and the horizontal floor panel 27A are connected together by a horizontal "three-panel" connecting member 33 which may be of the type shown in Fig. 12. At each corner of the top panel 27 a corner piece 30 is provided to maintain a clean outline at the junction between the various connecting members 28, 29. This corner piece 30, which is shown in greater detail in Figs. 14 and 15, has three sides 31 and a central triangular portion 32. Each of the sides 31 is similar in shape to the connecting members 28, 29, as can be seen by comparing the side view (Fig. 15) with Fig. 6, so that each side 31 can be fitted into a respective end of the slots 13 of two connected panels, adjacent the end of the connecting member. The corners of the corner piece 30 can be cut-away as indicated by the dotted lines in Fig. 14 to enable the piece to be inserted more easily in the ends of the panel extrusions 6. When in position, the triangular portion 32 of the corner piece is visible.

While the panels shown in Figs. 1 and 13 are square and all the same size, other shapes of panel may be employed and panels of different sizes connected together.

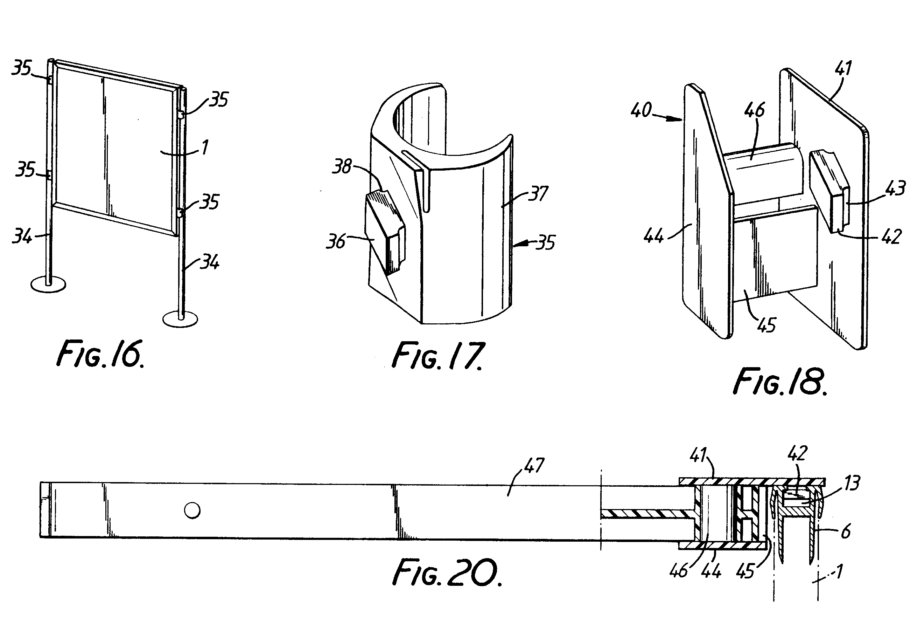

The panels shown in the drawings are substantially the same as those shown in British Patent Specification No 2 126 309 referred to above, the description of which is incorporated herein by reference. Briefly, British Patent Specification No 2 126 309 describes a screen assembly of the type shown in Fig. 16, comprising at least one panel 1 and two upright poles 34 to which the panel is fastened. The panel 1 is substantially the same as those shown in Fig. 1 and it is fastened to the poles 34 by clips 35 one of which is shown in Fig. 17. Each clip 35 has a foot portion 36 and an arcuate portion 37 to which the foot portion is connected by a neck 38. The foot portion 36 can be inserted into the end of the slot 13 (Fig. 2) in one side of the panel and slid along the slot to the desired location, the neck 38 of the clip being located between the lips 14 of the panel extrusion 6. The clip 35 is then rotated, whereupon the foot portion 36 becomes progressively more securely clamped in the slot 13 and, finally, is locked to the panel. The arcuate portion 37 of the clip can then be snapped onto the pole 34.

Because the panels 1 of the screen assemblies shown in Figs. 1 and 16 are of similar construction, it is possible to construct a screen assembly in which certain panel edges are joined together by slide connecting members of the kind shown in Figs. 2 and 4 to 12 and in which other panel edges are joined together by clips 35 and poles 34 as shown in Fig. 16. Other members which can be fastened in the panel slots 13 can also be provided for use with the screen assembly. These members could, for example, be supporting members such as shelf brackets having foot portions which can be fastened in the slots 13 in a similar manner to the clips 35 of Fig. 17: an example of such a bracket is described in the above-mentioned British Patent Specification No 2 126 309 and is also shown in the accompanying Figs. 18 to 20. This bracket 40 is made in one piece of plastics material and comprises a main plate-like part 41 to which a foot portion 42 is connected by a neck 43. The foot portion 42 is substantially the same as the foot portion 36 of the clip 35 shown in Fig. 17. The bracket 40 also has a subsidiary plate-like part 44 held in spaced parallel relationship to the main part 41 bya plate-like bridge 45 and a bridge 46 of curved cross-section.

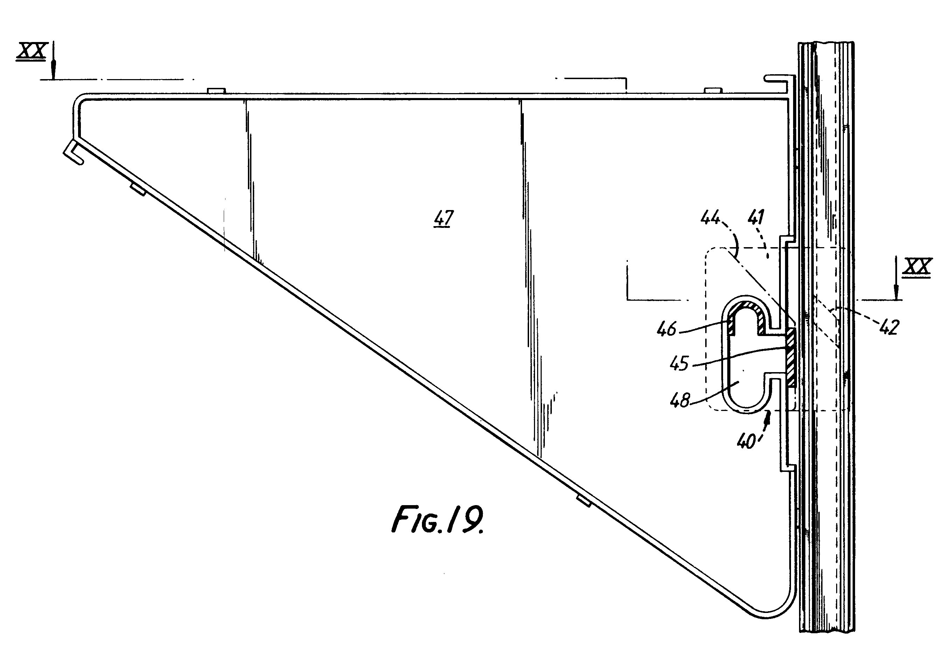

The bracket 40 is attached to a panel 1 of a screen assembly in the same manner as the clip 35 of Fig. 17, that is, the foot portion 42 of the bracket is inserted into the end of the slot 13 (Fig. 2) in one side of the panel and is slid along the slot to the desired location whereupon the bracket is rotated to clamp the foot portion in the slot. The orientation of the bracket in the clamped position is shown in Figs. 19 and 20 which also show how a shelf support 47 having a recess 48 in one side can then be hung over the curved bridge 46 of the bracket.

It will be understood that, for supporting a shelf, a pair of brackets 40 would be used comprising a "right hand" and a "left hand" bracket for location on opposite side edges of a panel. The shelf would then be placed on top of the pair of supports 47 hung on the brackets. A bracket 40 such as that shown in Fig. 18 could, however, be used for other purposes, for example to mount a light or some other component on a screen assembly and could then be formed as an integral part of that component. It will also be understood that the bracket 40 of Fig. 18 can be used in a screen assembly in which the panels 1 are joined together exclusively by slide connecting members of the kind shown in Figs. 2 and 4 to 12 and also in a screen assembly in which a combination of slide connecting members and poles with clips (Fig. 16) are used.

Alternatively, instead of using the slots 13 in the panels as mounting points for components such as shelf brackets, use can be made of longitudinal slots provided in the connecting members 2 between panels. Connecting members which incorporate such grooves are illustrated in Figs. 21 to 23. Each of these connectors is an extruded component of hollow cylindrical construction similar to the connectors shown in Figs. 10 and 11 and is provided, on the front portion 25 of the central body 20, with a longitudinally-extending slot 50 having a main part 51 of circular cross-section and an outwardly-flared entrance portion 52. The connecting members shown in Figs. 21 to 23 will provide angles, between connected panels, of 180°, 135° and 90° respectively but, in each case, the mouth of the entrance portion 52 of the slot 50 will be accessible between the panels.

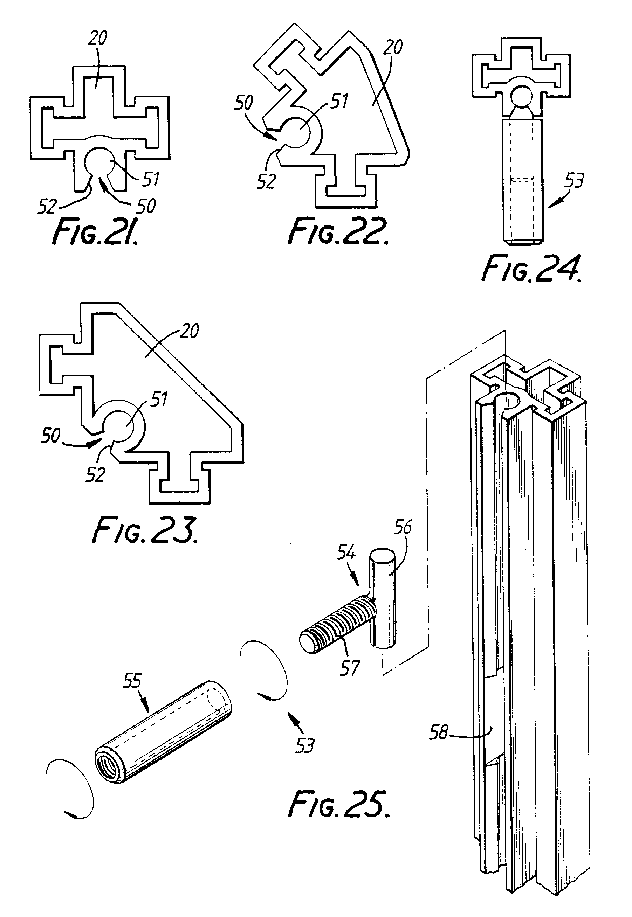

Fastening devices of the form shown at 53 in Figs. 24 and 25 can be used for securing components (such as shelves) to a display system incorporating connecting members of the type shown in Figs. 21 to 23. The fastening device 53 is shown in combination with the connecting member of Fig. 21 but could also be used with the connecting members of Figs. 22 and 23.

The device 53 comprises two components 54, 55. The component 54 has a cylindrical part 56 and an externally-threaded part 57 which extends at right angles from the cylindrical part. The diameter of the cylindrical part 56 is such that this part can be inserted into one end of the main part 51 of the slot 50 in the connecting member and slid along the slot with the threaded part 57 projecting from the entrance portion 52. The component 55 is tubular and threaded internally so that it can be screwed on to the part 57 of component 54 and into engagement with the outer surface of the connecting member, to clamp the component 54 at any desired location along the length of the slot 50.

When the device 53 has been secured in position, a component such as a shelf support (not shown) can be screwed into the outer end of the part 55 of the device.

If the end of the slot 50 is inaccessible, the walls of the slot entrance 52 can be cut away as indicated at 58 to allow the cylindrical part 56 of component 54 to be inserted into the slot at a convenient point along the length of the latter.

It will be appreciated that, using vertical connector members of the type shown in Fig. 23, a display case similar to that shown in Fig. 13 can be constructed without the need for the "three-panel" connecting members 33: instead, shelf brackets are secured to the vertical connector members of the display case using fastening devices 53 as shown in Fig. 24 and are used to support the horizontal floor panel 27A.

## Claims

1. A portable display system comprising a plurality of display panels (1) and at least one elongate connecting member (2,3) to connect the panels together, each panel comprising at least one screen member (10) and at least one frame member (6) which provides a channel (7,12) in which an edge of the screen member (10) is received and also provides an outwardly-facing slot (13) in an edge of the panel, each slot (13) comprising an interior portion and a restricted outer entrance portion which is defined by inwardly projecting lips (14) that extend towards one another in a plane perpendicular to the plane of the screen member (10), the or each connecting member (2) having a uniform cross-section with at least two slot engaging heads (18) that extend at fixed angles relative to one another, each head having a width greater than the width of the entrance portion, so that the heads of the connecting member (2) can be inserted into the ends of the said slots (13) in respective panels that are to be connected together and slid along the slots (13), thereby coupling the edges of the panels together, with the heads of the connecting member (2) being unable to pass through the entrance portions of the slots (13), wherein the or each connecting member (2) has a body portion (20) to which the slot engaging heads (18) are joined, the body portion having a width greater than the width of the entrance portions of the slots (13), and wherein the connecting member (2) and frame members (6) are shaped such that when in use the connecting member (2) is coupling the edges of the panels together, the body portion (20) extends outwards between and alongside the lips (14) of the frame members (6) of adjacent panels and defines, together with the slot engaging heads (18), recesses (19) in which the lips (14) of the frame members (6) engage, the engagement of the lips in the recesses and the location of the outwardly extending body portion (20) between the lips of adjacent panels holding the panels in a substantially fixed angular relationship.

2. A display system as claimed in claim 1, in which each screen member (10) is removable from its frame member(s) (6).

3. A display system as claimed in claim 1 or claim 2, in which a longitudinally-extending further slot (50) is formed in the body portion (20) of the connecting member (2) in such a position that the entrance of the further slot (50) will be located between adjacent panels connected together by the connecting member (2); the display system including at least one component (53) securable in the further slot (50) in the connecting member.

4. A display system as claimed in any one of the preceding claims, wherein the body portion (20) extends outwards to fill, substantially, the gap between the said adjacent panels.

5. A display system as claimed in any one of the preceding claims, wherein the or each connecting member (2) is of hollow cylindrical construction, the wall of the cylinder being shaped to form the slot engaging heads (18).

6. A display system as claimed in any one of the preceding claims, wherein the or each connecting member (2) is an extruded component.

7. A display system as claimed in any one of the preceding claims, wherein each panel slot (13) extends along substantially the whole length of the edge of the panel in which it is formed.

8. A display system as claimed in any one of the preceding claims, wherein the connecting member (2) is arranged to connect panels (1) together in a common plane.

9. A display system as claimed in any one of claims 1 to 7, wherein the connecting member (2) is arranged to connect panels (1) together in planes inclined to one another.

10. A display system as claimed in any one of the preceding claims, in which a respective frame member (6) is provided along each edge of the panels.

11. A display system as claimed in claim 10, wherein adjoining ends of the frame members (6) of a panel are connected by an angled bracket (15) which is fixed to interior walls of the frame members.

12. A display system as claimed in any one of the preceding claims, wherein the or each frame member (6) is an aluminium extrusion.

13. A display system as claimed in any one of the preceding claims, in which the screen member (10) forms part at least of a face of the panel.

14. A display system as claimed in claim 13, in which each panel comprises two spaced-apart screen members (10) each providing substantially the whole of a respective face of the panel and each frame member (6) provides two channels (7), each of which channels (7) receives an edge of a respective one of the screen members (10).

15. A display system as claimed in claim 14, wherein an edge of each screen member (10) overlaps the longitudinal side walls (8) of the slot (13) in the frame member; each channel (7) being defined, at least partly, by the longitudinal side walls.

16. A display system as claimed in any one of the preceding claims, wherein a plurality of connecting members (2,3) are provided and the connecting members are of various lengths.

17. A display system as claimed in claim 16, wherein the connecting members include a connecting member (3) of length approximately equal to the length of a side of a panel to be connected and a connecting member (2) of length approximately equal to half the length of a side of a panel to be connected.

18. A display system as claimed in any one of the preceding claims, in which one head of a connecting member is located partly in the slot (13) in one edge of a first panel and partly in the slot (13) in one edge of a second panel.

19. A display system as claimed in claim 18, in which at least four panels are provided and the other head of the or said one connecting member is located at least partly in the slot (13) in one edge of the third panel and partly in the slot (13) in one edge of the fourth panel.

20. A display system as claimed in any one of the preceding claims, further including at least one fastening element (40) which has a foot portion (42) securable in a slot (13) in one of the panels and a supporting portion (46) by which a component may be mounted on the screen assembly.

21. A display system as claimed in claim 20, in which the foot portion (42) is securable in the slot (13) by rotation.

22. A display system as claimed in claim 20 or 21, in which the supporting portion is in the form of a shelf-supporting bracket (46,47).

23. A display system as claimed in any one of the preceding claims, further including a plurality of poles (34) and a plurality of fastening elements (35), each fastening element having a foot portion (36) securable in a slot (13) in a panel edge and an arcuate portion (37) that is connected to the foot portion (36) and that is capable of being snapped onto a pole, whereby panels may be connected together either by said elongate members or by said fastening elements (35) and poles (34).

24. A display system as claimed in any one of the preceding claims, wherein the system is so designed that panels can be connected by both horizontally and vertically extending connecting members.

## Patentansprüche

1. Ein tragbare Display-System, umfassend eine Mehrzahl von Display-Paneelen (1) und mindestens ein langgestrecktes Verbindungsglied (2, 3) zum Verbinden der Paneele miteinander, wobei jedes Paneel mindestens ein Füllungsglied (10) und mindestens ein Rahmenglied (6) umfaßt, welches einen Kanal (7, 12) aufweist, in welchem eine Kante des Füllungsgliedes (10) aufgenommen ist, und ferner einen auswärts gerichteten Schlitz (13) in einer Kante des Paneels vorsieht, wobei jeder Schlitz (13) einen inneren Abschnitt und einen eingeschnürten äußeren Einlaßabschnitt aufweist, der definiert wird durch einwärts ragende Lippen (14), die einander zugekehrt sind in einer Ebene senkrecht zu der Ebene des Füllungsglieds (10), wobei das oder jedes Verbindungsglied (2) einen gleichförmigen Querschnitt aufweist mit mindestens zwei in die Schlitze greifenden Köpfen (18), die sich unter festen Winkeln relativ zueiander erstrecken, wobei jeder Kopf eine Breite aufweist, die größer ist als die Breite des Einlaßabschnitts, so daß die Köpfe der Verbindungsglieder (2) in die Enden der Schlitze (13) in entsprechenden Paneelen, die miteinander zu verbinden sind, einführbar sind und längs der Schlitze (13) gleiten können, wodurch die Kanten der Paneele miteinander gekoppelt werden, wobei die Köpfe der Verbindungsglieder (2) nicht in der Lage sind, durch die Einlaßabschnitte der Schlitze (13) hindurchzutreten, wobei das oder jedes Verbindungsglied (2) einen Korpusabschnitt (20) aufweist, mit dem die in die Schlitze greifenden Köpfe (18) verbunden sind, welcher Korpusabschnitt eine Breite aufweist, die größer ist als die Breite der Einlaßabschnitte der Schlitze (13) und wobei das Verbindungsglied (2) und die Rahmenglieder (6) so geformt sind, daß beim Einsatz das Verbindungsglied (2) die Kanten der Paneele miteinander kuppelt, wobei der Korpusabschnitt (20) sich auswärts zwischen und längs der Lippen (14) der Rahmenglieder (6) benachbarter Paneele erstreckt und zusammen mit den in die Schlitze greifenden Köpfen (18) Ausnehmungen (19) begrenzt, in die die Lippen (14) der Rahmenglieder (6) eingreifen, wobei der Eingriff der Lippen in die Ausnehmungen und die Positionierung des sich auswärts erstreckenden Korpusabschnitts (20) zwischen den Lippen benachbarter Paneele die Paneele in einem im wesentlichen festliegenden winkelmäßigen Verhältnis hält.

2. Ein Display-System nach Anspruch 1, bei dem jedes Füllungsglied (10) aus seinem Rahmenglied/seinen Rahmengliedern (6) entnehmbar ist.

3. Ein Display-System nach Anspruch 1 oder Anspruch 2, bei dem ein sich in Längsrichtung erstreckender weiterer Schlitz (50) im Korpusabschnitt (20) des Verbindungsgliedes (2) in einer solchen Position ausgebildet ist, daß der Einlaß des weiteren Schlitzes (50) sich zwischen benachbarten Paneelen befindet, die durch das Verbindungsglied (2) miteinander verbunden sind, welches Display-System mindestens eine Komponente (53) umfaßt, die in dem weiteren Schlitz (50) des Verbindungsgliedes festlegbar ist.

4. Ein Display-System nach einem der vorangehenden Ansprüche, bei dem der Korpusabschnitt (20) sich nach außen erstreckt, um im wesentlichen den Spalt zwischen den genannten benachbarten Paneelen zu füllen.

5. Ein Display-System nach einem der vorangehenden Ansprüche, bei dem das oder jedes Verbindungsglied (2) von hohem zylindrischem Aufbau ist, wobei die Wandung des Zylinders geformt ist zur Bildung der in die Schlitze greifenden Köpfe (18).

6. Ein Display-System nach einem der vorangehenden Ansprüche, bei dem das oder jedes Verbindungsglied (2) eine extrudierte Komponente ist.

7. Ein Display-System nach einem der vorangehenden Ansprüche, bei dem jeder paneelseitige Schlitz (13) sich längs im wesentlichen der gesamtem Länge der Kante des Paneels erstreckt, in welchem er ausgebildet ist.

8. Ein Display-System nach einem der vorangehenden Ansprüche, bei dem das Verbindungsglied (2) angeordnet ist zum Verbinden von Paneelen (1) miteinander in einer gemeinsamen Ebene.

9. Ein Display-System nach einem der Ansprüche 1 bis 7, bei dem das Verbindungsglied (2) angeordnet ist zum Verbinden von Paneelen (1) miteinander in zueinander geneigten Ebenen.

10. Ein Display-System nach einem der vorangehenden Ansprüche, bei dem ein entsprechendes Rahmenglied (6) längs jeder Kante der Paneele vorgesehen ist.

11. Ein Display-System nach Anspruch 10, bei dem aneinanderstoßende Enden der Rahmenglieder (6) eines Paneels mittels eines Winkelstücks (15) verbunden sind, das an den Innenwandungen der Rahmenglieder befestigt ist.

12. Ein Display-System nach einem der vorangehenden Ansprüche, bei dem das oder jedes Rahmenglied (6) aus Aluminium extrudiert ist.

13. Ein Display-System nach einem der vorangehenden Ansprüche, bei dem das Füllungsglied (10) mindestens einen Teil einer Außenseite des Paneels bildet.

14. Ein Display-System nach Anspruch 13, bei dem jedes Paneel zwei beabstandete Füllungsglieder (10) umfaßt, jeweils im wesentlichen die Gesamtheit einer entsprechenden Außenseite des Paneels bildend, und jedes Rahmenglied (6) zwei Kanäle (7) aufweist, von denen jeder Kanal (7) eine Kante eines zugeordneten der Füllungsglieder (10) aufnimmt.

15. Ein Display-System nach Anspruch 14, bei dem eine Kante jedes Füllungsgliedes (10) die Längsseitenwandung (8) des Schlitzes (13) in dem Rahmenglied überlappt, wobei jeder Kanal (7) mindestens teilweise durch die Längsseitenwandungen begrenzt ist.

16. Ein Display-System nach einem der vorangehenden Ansprüche, bei dem eine Mehrzahl von Verbindungsgliedern (2, 3) vorgesehen ist und die Verbindungsglieder von unterschiedlicher Länge sind.

17. Ein Display-System nach Anspruch 16, bei dem die Verbindungsglieder ein Verbindungsglied (3) einer Länge umfassen, die etwa gleich ist der Länge einer Seite eines zu verbindenden Paneels, sowie ein Verbindungsglied (2) einer Länge, etwa gleich der Hälfte der Länge einer Seite eines zu verbindenden Paneels.

18. Ein Display-System nach einem der vorangehenden Ansprüche, bei dem ein Kopf eines Verbindungsgliedes teilweise in dem Schlitze (13) in einer Kante eines ersten Paneels und teilweise in dem Schlitz (13) in einer Kante eines zweiten Paneels positioniert ist.

19. Ein Display-System nach Anspruch 18, bei dem mindestens vier Paneele vorgesehen sind und der andere Kopf des oder des genannten Verbindungsgliedes mindestens teilweise in dem Schlitz in einer Kante des dritten Paneels und teilweise in dem Schlitz (13) in einer Kante des vierten Paneels positioniert ist.

20. Ein Display-System nach einem der vorangehenden Ansprüche, ferner umfassend zumindest ein Befestigungselement (40) mit einem Fußabschnitt (42), der in einem Schlitz (13) in einem der Paneele festlegbar ist, und einem Supportabschnitt (46), mittels welchem eine Komponente an der Füllungsbaugruppe montierbar ist.

21. Ein Display-System nach Anspruch 20, bei dem der Fußabschnitt (42) in dem Schlitz (13) durch Verdrehen festlegbar ist.

22. Ein Display-System nach Anspruch 20 oder 21, bei dem der Supportabschnitt die Form eines bodenabstützenden Winkels (46, 47) aufweist.

23. Ein Display-System nach einem der vorangehenden Ansprüche, ferner umfassend eine Mehrzahl von Pfosten (34) und eine Mehrzahl von Befestigungselementen (35), wobei jedes Befestigungselement einen Fußabschnitt (36) aufweist, der in einem Schlitz (13) in einer Paneelkante festlegbar ist und einen Bogenabschnitt (37) aufweist, der mit dem Fußabschnitt (36) verbunden ist und auf einen Pfosten aufschnappbar ist, wodurch Paneele miteinander verbunden werden können, entweder über die langgestreckten Glieder oder durch die Verbindungselemente (35) und Pfosten (34).

24. Ein Display-System nach einem der vorangehenden Ansprüche, bei dem das System so konstruiert ist, daß die Paneele sowohl durch horizontal als auch durch vertikal sich erstreckende Verbindungsglieder verbunden werden können.

## Revendications

1. Un système portable de présentation comprenant une série de panneaux de présentation (1) et au moins un élément de liaison allongé (2, 3) pour relier entre eux les panneaux, chaque panneau comprenant au moins un élément (10) d'écran et au moins un élément de cadre (6) qui comporte un canal (7, 12) dans lequel est reçu un bord de l'élément (10) d'écran et qui comporte aussi dans un bord du panneau une fente tournée vers l'extérieur (13), chaque fente (13) comprenant une partie intérieure et une partie d'entrée extérieure limitée qui est définie par des lèvres en saillie vers l'intérieur (14) qui s'étendent l'une vers l'autre dans un plan perpendiculaire au plan de l'élément (10) d'écran, la section transversale de l'élément de liaison (2) ou de chacun d'eux étant uniforme et pourvue d'au moins deux têtes (18) de venue en prise avec les fentes qui s'étendant selon des angles fixes l'une par rapport à l'autre, la largeur d'une tête étant plus grande que la largeur de la partie d'entrée d'une manière telle que les têtes de l'élément de liaison (2) peuvent être insérées dans les extrémités desdites fentes (13) dans des panneaux respectifs qui doivent être reliés entre eux et glissées le long des fentes (13), en accouplant ainsi entre eux les bords des panneaux, les têtes de l'élément de liaison (2) ne pouvant traverser les parties d'entrée des fentes (13), l'élément de liaison (2) ou chacun d'eux étant pourvu d'une partie (20) de corps sur laquelle sont assemblées les têtes (18) venant en prise avec les fentes, la largeur de la partie de corps étant plus grande que la largeur des parties d'entrée des fentes (13), et l'élément de liaison (2) et les éléments (6) de cadre étant configurés d'une manière telle que, en utilisation, l'élément de liaison (2) accouple entre eux les bords des panneaux, la partie (20) de corps s'étend vers l'extérieur entre les lèvres (14) des éléments (6) de cadre de panneaux adjacents et le long de celles-ci et définit, avec les têtes (18) venant en prise avec les fentes, des évidements (19) dans lesquels viennent en prise les lèvres (14) des éléments (6) de cadre, la venue en prise des lèvres dans les évidements et le positionnement de la partie (20) de corps s'étendant vers l'extérieur entre les lèvres de panneaux adjacents retenant les panneaux dans une relation angulaire sensiblement fixe.

2. Un système de présentation selon la revendication 1, dans lequel chaque élément (10) d'écran est amovible de son élément ou de ses éléments (6) de cadre.

3. Un système de présentation selon la revendication 1 ou la revendication 2, dans lequel une autre fente s'étendant longitudinalement (50) est ménagée dans la partie (20) de corps de l'élément de liaison (2) dans une position telle que l'entrée de l'autre fente (50) est positionnée entre des panneaux adjacents reliés entre eux par l'élément de liaison (2); le système de présentation incluant au moins un composant (53) qui peut être monté dans l'autre fente (50) de l'élément de liaison.

4. Un système de présentation selon l'une quelconque des revendications précédentes, dans lequel la partie (20) de corps s'étend vers l'extérieur de manière à remplir sensiblement l'intervalle entre lesdits panneaux adjacents.

5. Un système de présentation selon l'une quelconque des revendications précédentes, dans lequel la structure de l'élément de liaison (2) ou de chacun d'eux est un cylindre creux, la paroi du cylindre étant configurée de manière à former les têtes (18) venant en prise avec les fentes.

6. Un système de présentation selon l'une quelconque des revendications précédentes, dans lequel l'élément de liaison (2) ou chacun d'eux est un composant extrudé.

7. Un système de présentation selon l'une quelconque des revendications précédentes, dans lequel chaque fente (13) de panneau s'étend sensiblement sur toute la longueur du bord du panneau dans lequel elle est ménagée.

8. Un système de présentation selon l'une quelconque des revendications précédentes, dans lequel l'élément de liaison (2) est agencé de manière à relier entre eux des panneaux (1) situés dans un plan commun.

9. Un système de présentation selon l'une quelconque des revendications 1 à 7, dans lequel l'élément de liaison (2) est agencé de façon à relier entre eux des panneaux (1) situés dans des plans inclinés l'un par rapport à l'autre.

10. Un système de présentation selon l'une quelconque des revendications précédentes, dans lequel un élément respectif (6) de cadre est disposé le long de chaque bord des panneaux.

11. Un système de présentation selon la revendication 10, dans lequel des extrémités adjacentes des éléments (6) de cadre d'un panneau sont reliées par une console inclinée (15) qui est fixée à des parois intérieures des éléments de cadre.

12. Un système de présentation selon l'une quelconque des revendications précédentes, dans lequel l'élément (6) de cadre ou chacun d'eux est un profil extrudé en aluminium.

13. Un système de présentation selon l'une quelconque des revendications précédentes, dans lequel l'élément (10) d'écran fait partie d'au moins une face du panneau.

14. Un système de présentation selon la revendication 13, dans lequel chaque panneau comprend deux éléments (10) d'écran espacés l'un de l'autre constituant chacun sensiblement la totalité d'une face respective du panneau, et chaque élément (6) de cadre comporte deux canaux, chacun de ces canaux (7) recevant un bord d'un élément respectif parmi les éléments (10) d'écran.

15. Un système de présentation selon la revendication 14, dans lequel un bord de chaque élément (10) d'écran recouvre les parois latérales longitudinales (8) de la fente (13) de l'élément de cadre; chaque canal (7) étant défini, au moins partiellement, par les parois latérales longitudinales.

16. Un système de présentation selon l'une quelconque des revendications précédentes, dans lequel il est prévu une série d'éléments de liaison (2, 3) et les longueurs des éléments de liaison sont diverses.

17. Un système de présentation selon la revendication 16, dans lequel les éléments de liaison incluent un élément de liaison (3) d'une longueur approximativement égale à la longueur d'un côté d'un panneau à relier et un élément liaison (2) d'une longueur approximativement égale à la moitié de la longueur d'un côté d'un panneau à relier.

18. Un système de présentation selon l'une quelconque des revendications précédentes, dans lequel une tête d'un premier élément de liaison est positionnée en partie dans la fente (13) d'un bord du premier panneau et en partie dans la fente (13) d'un bord du deuxième panneau.

19. Un système de présentation selon la revendication 18, dans lequel au moins quatre panneaux sont prévus et l'autre tête de l'élément de liaison ou dudit premier élément de liaison est positionnée au moins partiellement dans la fente (13) d'un bord du troisième panneau et en partie dans la fente (13) d'un bord du quatrième panneau.

20. Un système de présentation selon l'une quelconque des revendications précédentes, incluant en outre au moins un élément de fixation (40) pourvu d'une partie de pied (42) qui peut être montée dans une fente (13) de l'un des panneaux et d'une partie de support (46) au moyen de laquelle un composant peut être monté sur l'ensemble d'écran.

21. Un système de présentation selon la revendication 20, dans lequel la partie de pied (42) peut être montée dans la fente (13) par rotation.

22. Un système de présentation selon la revendication 20 ou 21 dans lequel la forme de la partie de support est une console (46, 47) de support d'étagère.

23. Un système de présentation selon l'une quelconque des revendications précédentes, incluant en outre une série de montants (34) et une série d'éléments de fixation (35), chaque élément de fixation comprenant une partie de pied (36) qui peut être montée dans une fente (13) d'un bord de panneau et une partie incurvée (37) qui est reliée à la partie de pied (36) et qui peut être encliquetée sur un montant, grâce à quoi des panneaux peuvent être reliés entre eux, soit par lesdits éléments allongés, soit par lesdits éléments de fixation (35) et lesdits montants (34).

24. Un système de présentation selon l'une quelconque des revendications précédentes, dans lequel le système est conçu d'une manière telle que des panneaux peuvent être reliés par des éléments de liaison s'étendant tant à l'horizontale qu'à la verticale.
